(19) Europäisches Patentamt
European Patent Office
Office européen des brevets

(11) **EP 1 680 253 B1**

(12) **EUROPÄISCHE PATENTSCHRIFT**

(45) Veröffentlichungstag und Bekanntmachung des Hinweises auf die Patenterteilung:
**01.04.2009 Patentblatt 2009/14**

(21) Anmeldenummer: **04818158.0**

(22) Anmeldetag: **08.11.2004**

(51) Int Cl.:
**B23K 9/09** *(2006.01)*        **B23K 9/173** *(2006.01)*
**B23K 9/028** *(2006.01)*        **B23K 9/032** *(2006.01)*

(86) Internationale Anmeldenummer:
**PCT/EP2004/052863**

(87) Internationale Veröffentlichungsnummer:
**WO 2005/044501 (19.05.2005 Gazette 2005/20)**

(54) **VERFAHREN ZUR STEUERUNG DER SCHWEISSPARAMETER BEIM ALUMINIUMSCHWEISSEN MIT EINEM EINER RICHTUNGSÄNDERUNG AUFWEISENDEN SCHWEISSBAHN**

METHOD FOR CONTROLLING THE WELDING PARAMETER DURING ALUMINIUM WELDING BY MEANS OF A WELDING PATH WITH A CHANGE IN DIRECTION

PROCEDE DE COMMANDE DES PARAMETRES POUR LE SOUDAGE D'UNE BANDE DE SOUDAGE EN ALUMINIUM PRESENTANT UN CHANGEMENT DE DIRECTION

(84) Benannte Vertragsstaaten:
**AT BE BG CH CY CZ DK EE ES FI FR GB GR HU IE IS IT LI LU MC NL PL PT RO SE SI SK TR**

(30) Priorität: **07.11.2003 DE 10352451**

(43) Veröffentlichungstag der Anmeldung:
**19.07.2006 Patentblatt 2006/29**

(73) Patentinhaber: **OTC Daihen Europe GmbH 41066 Mönchengladbach (DE)**

(72) Erfinder:
• **ASANO, Shinichi 40667 Meerbusch (DE)**
• **HERRMANN, Achim 50189 Elsdorf (DE)**

(74) Vertreter: **Bonsmann, Joachim Bernhard et al Bonsmann & Bonsmann Patentanwälte Kaldenkirchener Strasse 35 a 41063 Mönchengladbach (DE)**

(56) Entgegenhaltungen:
**EP-A- 0 890 407          DE-A1- 4 323 924**

• **PATENT ABSTRACTS OF JAPAN Bd. 2000, Nr. 12, 3. Januar 2001 (2001-01-03) & JP 2000 246443 A (NIPPON LIGHT METAL CO LTD), 12. September 2000 (2000-09-12)**
• **PATENT ABSTRACTS OF JAPAN Bd. 2003, Nr. 02, 5. Februar 2003 (2003-02-05) & JP 2002 316265 A (KAWASAKI HEAVY IND LTD), 29. Oktober 2002 (2002-10-29)**
• **PATENT ABSTRACTS OF JAPAN Bd. 009, Nr. 198 (M-404), 15. August 1985 (1985-08-15) & JP 60 062653 A (DAIHATSU MOTOR CO LTD), 10. April 1985 (1985-04-10)**
• **PATENT ABSTRACTS OF JAPAN Bd. 012, Nr. 208 (M-709), 15. Juni 1988 (1988-06-15) & JP 63 013677 A (DAIHEN CORP), 20. Januar 1988 (1988-01-20)**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

**EP 1 680 253 B1**

**Beschreibung**

Die vorliegende Erfindung betrifft ein Verfahren zur Steuerung der Schweißparameter bei einem mittels eines Schweißroboters durchgeführten Metallintertgaslichtbogenschweißvorgang für Aluminium bzw. eine Aluminiumlegierung gemäß dem Oberbegriff des Patentanspruches 1 (siehe, z.B, JP 2000/ 246 443 A).

Bauteile aus Aluminium bzw. Aluminiumlegierungen werden in den letzten Jahren vor allem im Fahrzeugbau aufgrund ihres geringen spezifischen Gewichts verstärkt eingesetzt. Das Schweißen von Aluminiumteilen ist jedoch aufgrund der spezifischen Materialeigenschaften - wie insbesondere des niedrigen Schmelzpunktes - mit besonderen Problemen verbunden. Derartige Probleme treten vor allem dann auf, wenn Schweißverbindungen zwischen Aluminiumbauteilen mit großer Wandstärke und Teilen mit deutlich geringerer Wandstärke in automatisierter Weise hergestellt werden sollen, wie dies z.B. bei Stoßfängerbaugruppen von Automobilen der Fall ist. Derartige Stoßfängerbaugruppen werden aufgrund der spezifischen, beim Automatenschweißen auftretenden Probleme bislang verschraubt, was einen größeren Montageaufwand sowie Gewichtsnachteile nach sich zieht.

Bei konventionellen automatisierten Aluminium-Schweißverfahren besteht die Gefahr, dass die Wärmeeinbringung durch den Schweißvorgang in das dünnere Bauteil zu einem Durchschmelzen dieses dünneren Bauteils führt, was selbstverständlich nicht akzeptabel ist. Einem derartigen Durchschmelzen könnte grundsätzlich dadurch entgegengewirkt werden, dass der Schweißstrom mit Rücksicht auf die für das dünnere Bauteil maximal zulässige Energieeinbringung reduziert wird. Der Schweißstrom darf jedoch auch nicht zu gering gewählt werden, da andernfalls die Anbindung des dickwandigeren Bauteils nicht mehr gewährleistet ist, da für den Schweißvorgang bei diesem Bauteil aufgrund dessen höherer Wärmekapazität eine relativ große Wärmeeinbringung erforderlich ist. Auch ist bei zu geringen Schweißströmen und damit verbundenen niedrigen Drahtförderraten nicht mehr gewährleistet, dass überhaupt genug Material in die Schweißnaht eingebracht werden kann und damit der jeweils spezifizierte Nahtquerschnitt (sog. A-Maß) realisiert werden kann.

Als besonders kritisch erweisen sich in diesem Zusammenhang Schweißbahnen, bei denen Richtungswechsel erforderlich sind. Es ist erstrebenswert, den Schweißvorgang bei derartigen Schweißbahnen über den Richtungswechsel hinweg kontinuierlich durchzuführen, da ein Neuansatz (Kaltstart) des Schweißvorgangs bei einem derartigen Richtungswechsel zu Kaltstellen und damit zu unbefriedigenden Schweißqualitäten führt. Bei einem durchgehenden Schweißen sind jedoch bei konventionellen Schweißverfahren insbesondere bei den Richtungswechseln Durchschmelzungen des dünneren Bauteils zu befürchten, die sich durch Anpassung der bei vorhandenen konventionellen Maschinenschweißverfahren verfügbaren Parameter (z.B. Schweißstrom, Drahtförderrate, Bahngeschwindigkeit) nicht zuverlässig verhindern lassen. Versuche, diesen Durchschmelzungen dadurch zu begegnen, dass der Schweißlichtbogen näher an dem dickwandigeren Bauteil als an dem dünneren Bauteil geführt wird, um so den Energieeintrag auf das dickere Bauteil zu konzentrieren, haben sich als nicht praktikabel erwiesen, da gerade bei Aluminiumbauteilen, die in einem kostengünstigen Strangpressverfahren hergestellt sind, die zulässigen Bauteiltoleranzen dazu führen können, dass der Lichtbogen bei ungünstigen Toleranzverhältnissen dem dickwandigeren Bauteil zu nahe kommt, was zu Kurzschlüssen führen kann. Aus diesem Grunde wäre es bei Verfolgung des vorstehend beschriebenen Ansatzes erforderlich, die Toleranzen mittels eines Detektorsystems individuell online zu bestimmen und dementsprechend die Lage des Schweißbrenners exakt nachzuführen. Ein derartiges Online-Detektorsystem müsste jedoch recht präzise arbeiten und wäre deshalb ausgesprochen kostenaufwändig. Weiterhin würde ein derartiges System die Fehleranfälligkeit des Gesamtsystems erhöhen.

Aus der DE 698 08 388 T2 ist ein Verfahren zur Steuerung der Schweißparameter bei einem mittels eines Schweißroboters durchgeführten Metallintertgaslichtbogenschweißvorgang bekannt, bei dem der Schweißvorgang als Wechselstrom-Metallintertgaslichtbogenschweißvorgang durchgeführt wird, und bei dem der Schweißstromanteil elektronegativer Polarität in Höhe und Dauer steuerbar ist. Den vorstehend geschriebenen Problemen bei Schweißbahnen mit Richtungswechseln wird jedoch dabei nicht Rechnung getragen.

Aus der JP 2000 246443 A ist ein gattungsgemäßes Verfahren zur Steuerung der Schweißparameter bei einem Wechselstrom-Intergaslichtbogenschweißvorgang u.a. für Aluminium bekannt. Der Schweißstromanteil elektronegativer Polarität bleibt jedoch gemäß diesem Dokument über den Schweißvorgang konstant.

Aus der JP 2002 316265 A ist es bekannt, das Polaritätsverhältnis bei einem Wechselstrom-Lichtbogenschweißvorgang für Aluminium abhängig von einem aktuell detektierten Abstand zwischen den Werkstücken zu verändern.

Die EP 0 890 407 A1 offenbart eine Schweißvorrichtung zum Wechselstrom-Lichtbogenschweißen, bei der der Anteil elektronegativer Polarität in Höhe und Dauer einstellbar ist, jedoch nicht in Abhängigkeit von Richtungsänderungen einer Schweißbahn.

Der vorliegenden Erfindung liegt dementsprechend die Aufgabe zugrunde, ein Schweißverfahren der eingangs genannten Art bereitzustellen, das bei vertretbarem Aufwand auch bei Dick/Dünn-Konstellation mit Richtungswechseln der Schweißbahn und mit großen toleranzbedingten Luftspalten Schweißnähte zufriedenstellender Qualität und mit ausreichendem Materialeintrag sicherstellt.

Die Lösung der vorgenannten Aufgabe erfolgt durch ein Verfahren gemäß den Merkmalen des Patentanspruches 1.

Vorteilhafte Ausgestaltungen der Erfindung sind in den abhängigen Patentansprüchen enthalten.

Die Erfindung wird nachfolgend anhand der Zeichnungen beispielhaft näher erläutert. Es zeigen:

Fig. 1    ein schematisches Strom/Zeitdiagramm zur grundsätzlichen Erläuterung des AC/MIG-Verfahrens;

Fig. 2    ein Diagramm, das einen Vergleich der für verschiedene EN-Raten möglichen Ströme und Drahtförderraten erlaubt;

Fig. 3    Schnittdarstellungen von Schweißnähten, die jeweils in einem DC-Puls- und einem AC-Puls-Schweißverfahren erzielt worden sind, bei unterschiedlichen zu überbrückenden Luftspalten;

Fig. 4    Schnittdarstellungen von Schweißnähten bei unterschiedlichen EN-Raten;

Fig. 5    eine beispielhafte Schweißbahn, wobei die Schweißparameter entlang dieser Bahn in den Diagrammen von Fig. 6 und Fig. 7 dargestellt sind;

Fig. 6    ein schematisches Diagramm verschiedener Schweißparameter bei Anwendung eines Verfahrens gemäß der vorliegenden Erfindung;

Fig. 7    ein Fig. 6 entsprechendes Diagramm bei einem DC-Schweißverfahren gemäß dem Stand der Technik;

Fig. 8    zwei Darstellungen zur Definition des Arbeits- und des Fahrwinkels des Schweißbrenners;

Fig. 9a-c    Schnittdarstellungen von Schweißnähten bei verschiedenen Wave-Puls-Frequenzen, und

Fig. 10    eine perspektivische Ansicht eines Anwendungsbeispiels der vorliegenden Erfindung.

Im Rahmen der vorliegenden Erfindung wird zur Lösung der vorgenannten Schweißaufgabe ein sog. AC/MIG-(Wechselstrom-Metallinertgas)-Schweißverfahren eingesetzt. Dieses Schweißverfahren unterscheidet sich von einem DC-(Gleichstrom)-Schweißverfahren dadurch, dass der Schweißstrom auch negative Werte annehmen kann, d.h., dass ein Elektronenfluss von dem Werkstück zur Schweißelektrode zurück stattfinden kann.

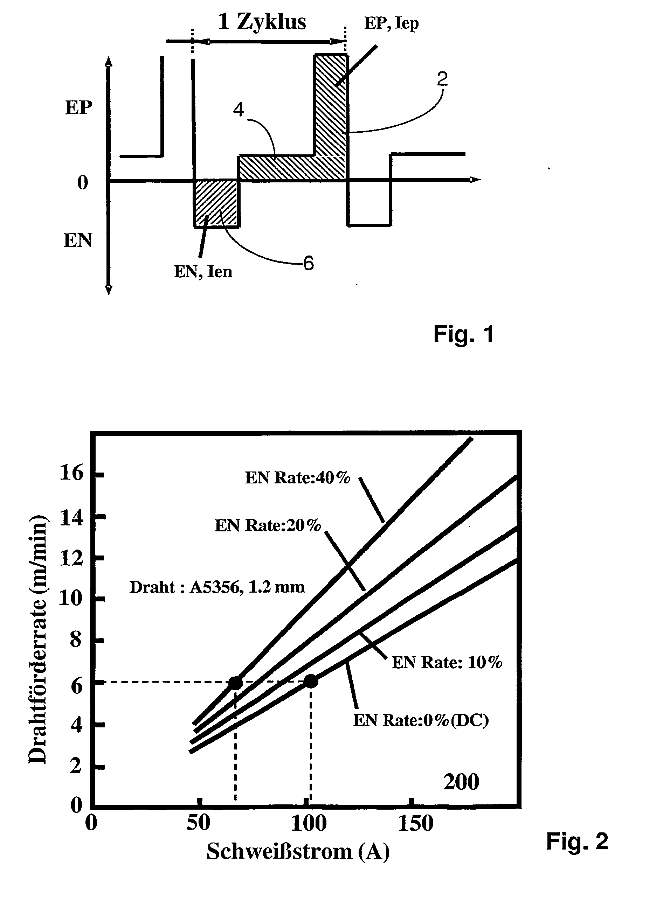

In Fig. 1 ist schematisch ein entsprechender zeitlicher Schweißstromverlauf dargestellt. In dem dargestellten Zyklus wird der Schweißdraht aufgeschmolzen sowie Tropfen von dem Schweißdraht abgelöst und durch den Schweißlichtbogen auf das zu verschweißende Grundmaterial transportiert. Der dargestellte Zyklus wiederholt sich mit einer relativ hohen Frequenz von typischerweise 450 Hz. Der Aufschmelzvorgang findet in einer in dem Diagramm von Fig. 1 mit 4 bezeichneten Phase statt; der Ablösungsvorgang bei einem erheblich größeren Strom in einer mit 2 bezeichneten Phase. In einer mit 6 bezeichneten Phase wechselt der Strom die Polarität, so dass sich Elektronen vom Grundmaterial zum Draht bewegen, wodurch der Draht zusätzlich aufgeschmolzen wird, während gleichzeitig der Energieeintrag in das Grundmaterial verringert ist. Der (zeitlich gemittelte) elektropositive Strom wird mit Iep bezeichnet; der elektronegative Stromanteil mit Ien. Der Schweißstromanteil mit elektronegativer Polarität (nachfolgend auch als EN-Rate bezeichnet) wird dementsprechend (in %) durch die Gleichung

$$\text{EN-Rate} = \text{Ien} \ / \ (\text{Ien} + \text{Iep}) \ * \ 100\%$$

definiert. Zwischen dem positiven und dem negativen Stromanteil wird durch Überlagerung eines geeigneten Impulses gewährleistet, dass der Schweißlichtbogen aufrecht erhalten bleibt.

Die apparative und schaltungstechnische Realisierung eines derartigen AC/MIG-Verfahrens ist bekannt und wird daher im Rahmen der vorliegenden Anmeldung nicht näher erläutert.

In Fig. 2 sind zur weiteren Erläuterung des AC/MIG-Verfahrens die bei bestimmten Schweißströmen (Gesamtstrom) erzielbaren Drahtförderraten (entsprechend den erzielbaren Materialeinbringungen in die Schweißnaht) bei verschiedenen EN-Raten dargestellt. Wie ersichtlich, ermöglicht eine höhere EN-Rate bei gegebener Materialeinbringungsrate (z.B. Drahtförderrate 6 m/min) eine deutliche Reduktion des Schweißstroms von z.B. über 100 A bei 0% EN-Rate bis auf ca. 75 A bei 40 % EN-Rate. Mit anderen Worten kann mit der EN-Rate das Verhältnis von Material- und Energieeinbringung in die Schweißnaht beeinflusst werden.

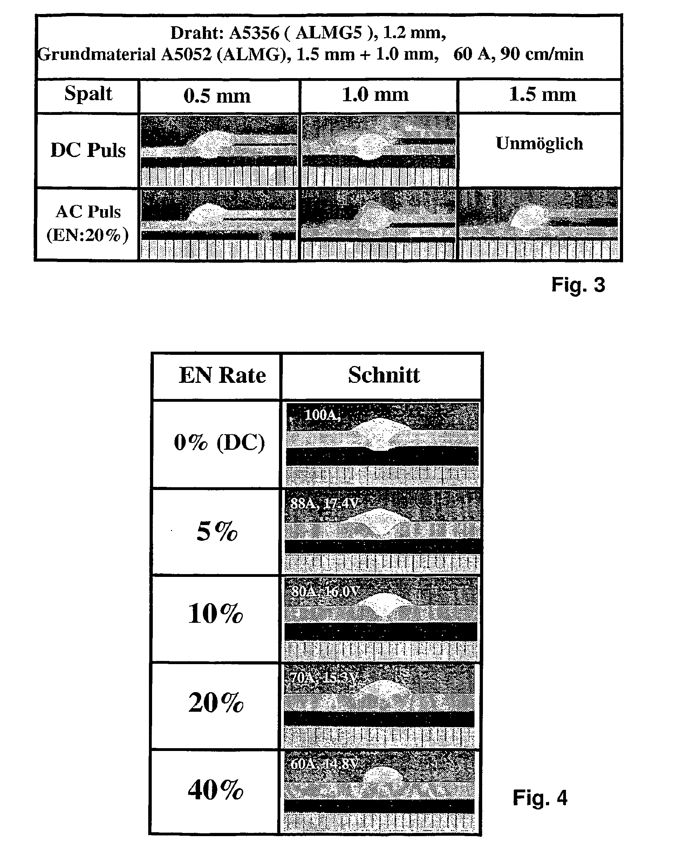

Dadurch können insbesondere bei dünnen Aluminiumblechen mit größeren Luftspalten Schweißverbindungen hergestellt werden, wobei gleichzeitig ein Durchschmelzen verhindert wird, wie aus den Schnittdarstellungen (Röntgenaufnahmen) von Schweißnähten in Fig. 3 ersichtlich. In Fig. 3 sind in der oberen Reihe im DC-Pulsverfahren (d.h. EN-Rate = 0) hergestellte Schweißnähte bei unterschiedlichen zu überbrückenden Luftspalten dargestellt. Schon bei 1.0 mm ergibt sich bei dem klassischen DC-Verfahren ein Durchschmelzen, wobei die Anbindung des oberen Blechs kaum mehr gegeben ist. Bei einem Luftspalt von 1.5 mm ist überhaupt keine Verbindung im DC-Pulsverfahren mehr realisierbar. Dagegen kann bei einer EN-Rate von 20 % (untere Reihe in Fig. 3) noch bei einem Luftspalt von 1.5 mm eine gute Schweißverbindung realisiert werden, ohne dass ein Durchschmelzen des unteren Blechs auftreten würde.

Entsprechend ist in den Schnittdarstellungen von Fig. 4 dargestellt, dass bei steigender EN-Rate und entsprechender Reduktion des Schweißstroms mit der steigenden EN-Rate bei vergleichbarer Materialeinbringung ein abnehmendes Eindringen in das Grundmaterial erreicht werden kann.

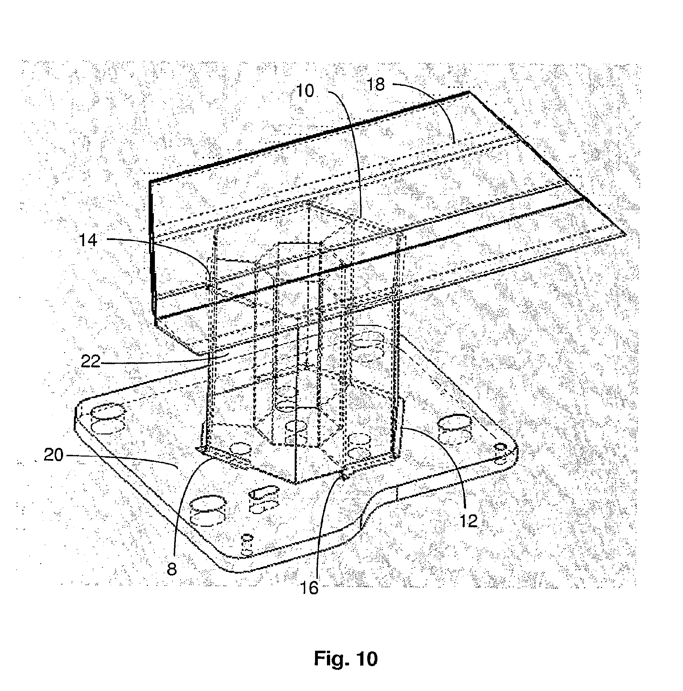

Ein Anwendungsbeispiel für ein erfindungsgemäß gesteuertes Schweißverfahren ist in Fig. 10 perspektivisch dargestellt. Es handelt sich um eine Stoßfängeranordnung bei einem Kraftfahrzeug. Zwischen einer Flanschplatte 20 und dem eigentlichen Stoßfänger 18 befindet sich u.a. eine sog. Crashbox 22 (insgesamt sind wenigstens zwei derartige Crashboxen vorhanden) mit einer sechseckförmigen Außenkontur, die gezielt die bei einem Aufprall frontal oder seitlich wirkenden Kräfte aufnehmen soll. Die Verbindung zwischen Crashbox 22 und Flanschplatte 20 bzw. zwischen Stoßfänger 18 und Crashbox 22 soll in dem dargestellten Ausführungsbeispiel durch insgesamt vier Schweißnähte 8, 10, 12 und 14 erfolgen, wobei die entsprechenden Schweißbahnen jeweils mindestens eine Richtungsänderung beinhalten.

Selbstverständlich ist die Anwendung des erfindungsgemäßen Verfahrens nicht auf die dargestellte Schweißaufgabe beschränkt. Vielmehr kann die Erfindung beispielsweise auch bei Schweißbahnen mit kreisbogenförmigen Richtungsänderungen oder spitzen Winkeln verwendet werden. Auch ist es nicht erforderlich, dass die zu verschweißenden Bauteile senkrecht aufeinander stehen.

Die Schweißnähte in dem in Fig. 10 dargestellten Ausführungsbeispiel sollen von einem Schweißroboter in a4-Kehlnaht-Ausführung gefertigt werden, wobei ein allseitiger Einbrand von ca. 1.1 mm vorgesehen ist. Diese Schweißaufgabe ist mit konventionellen Schweißverfahren nach bisherigen Erkenntnissen nicht zu lösen. Dies ist zum einen durch die unterschiedlichen Materialdicken der zu verbindenden Bauteile bedingt. Die Dicke des Stoßfängers 18 beträgt im Anwendungsbeispiel 2 mm und die Dicke der Flanschplatte 20 sogar 8 mm, wohingegen die Crashbox 22 aufgrund der Anforderungen an ihre Verformbarkeit im Crashfall aus einem Aluminiumblech mit einer relativ geringen Dicke von 1.8 mm gefertigt ist. Somit treffen insbesondere zwischen Flanschplatte 20 und Crashbox 22 Bauelemente mit einem Dickenverhältnis von ca. 1:4 aufeinander, was aufgrund unterschiedlicher Wärmekapazitäten aus den eingangs beschriebenen Gründen problematisch ist. Zum anderen sind insbesondere die in einem Strangpressverfahren hergestellten Crashboxen mit relativ großen Toleranzen behaftet, so dass Luftspalte bis zu etwa 1 mm auftreten können, die durch den Schweißvorgang zu überbrücken sind. Aus diesem Grunde sind relativ hohe Materialeinbringungen erforderlich, die bei konventionellen Verfahren zu einem Durchschmelzen der dünnwandigen Crashbox 22 führen würden.

Dieses Problem tritt verstärkt bei den während des Schweißvorganges erforderlichen Richtungsänderungen auf. Diese Richtungsänderungen sollen in einer kontinuierlichen Schweißbewegung ohne Neuansatz ausgeführt werden, da bei einem Neuansatz aufgrund von Kaltstellen nur unbefriedigende Schweißergebnisse erzielt werden. Dies ist im übrigen auch der Grund dafür, dass - wie aus Fig. 10 bei der Schweißnaht 12 - ersichtlich, der Schweißvorgang vorzugsweise etwa 10 bis 15 mm von der Crashbox entfernt angesetzt wird (vgl. Abschnitt 16 der Schweißnaht 12).

Bei derartigen Richtungsänderungen im Rahmen eines kontinuierlichen Schweißvorgangs wird im Bereich der "Ecken" aus geometrischen Gründen durch den Schweißvorgang mehr Energie in das Grundmaterial deponiert als auf geraden Abschnitten der Schweißbahn, so dass insbesondere hier die Gefahr eines Durchschmelzens der Crashbox besteht. Durch eine Reduktion des Schweißstroms bei den Richtungsänderungen oder durch eine Erhöhung der Bahngeschwindigkeit kann diesem Problem nicht beigekommen werden, da dann die Materialeinbringung zu gering wird und somit der vorgegebene Nahtquerschnitt (A-Maß) nicht erreicht wird. Dementsprechend wird im Rahmen der vorliegenden Erfindung die EN-Rate in Zusammenhang mit den Richtungsänderungen verändert, d.h. insbesondere erhöht. Hierdurch wird die Energieeinbringung bei in etwa gleich bleibender Materialeinbringung verringert und infolgedessen ein Durchschmelzen an dieser Stelle verhindert. Aus diesem Grunde müssen weder die Fahrgeschwindigkeit entlang der Schweißbahn wesentlich erhöht noch der Schweißstrom und/oder die Drahtfördergeschwindigkeit wesentlich reduziert werden, wie dies beim Stand der Technik an derartigen Stellen erforderlich ist. Eine "wesentliche" Erhöhung bzw. Reduktion soll in diesem Zusammenhang eine Erhöhung bzw. Reduktion in einem Maß bedeuten, wie es zur Kompensation des zusätzlichen Energieeintrages erforderlich ist.

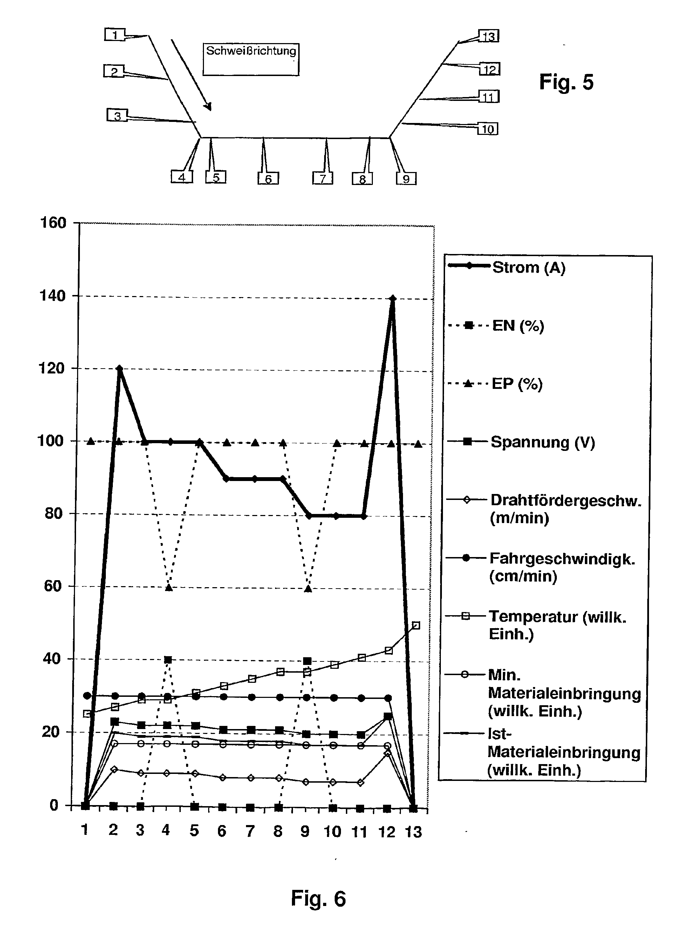

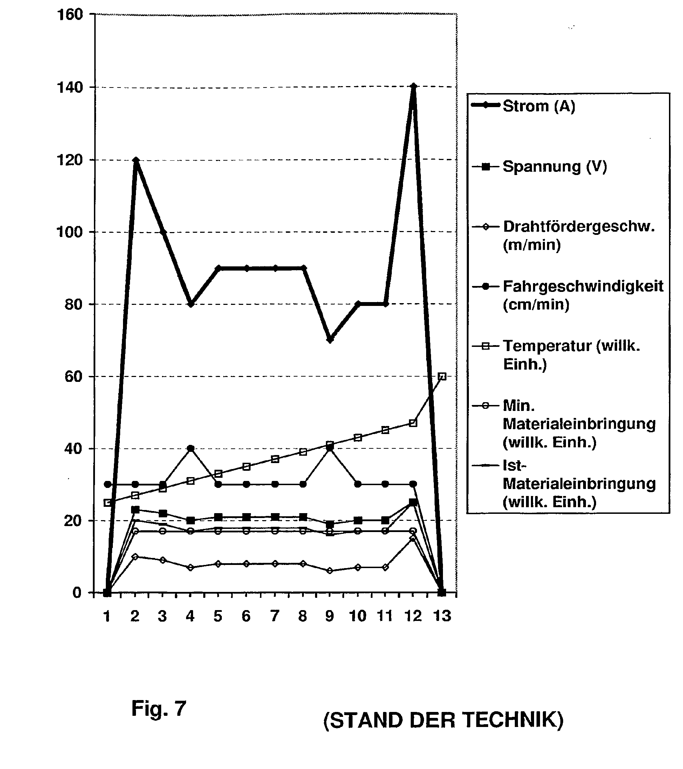

Ein erfindungsgemäßes Verfahren zur Steuerung der Schweißparameter wird nachfolgend anhand des schematischen Diagramms von Fig. 6 im Vergleich zu den bei einem konventionellen Verfahren gemäß Fig. 7 eingesetzten Schweißparametern näher erläutert. In Fig. 5 ist hierzu exemplarisch eine Schweißbahn mit Bahnpunkten 1 bis 12 dargestellt, die jeweils auf der x-Achse der Figuren 6 und 7 aufgetragen sind. Die Schweißbahn von Fig. 5 weist an den Punkten 4 und 9 Richtungsänderungen auf. In Fig. 6 ist an den entsprechenden Punkten der in Fig. 5 gezeigten Schweißbahn der jeweilige Schweißstrom (Einheit A), die EN-Rate und entsprechend komplementär die EP-Rate (entsprechend 100% minus EN-Rate), die Schweißspannung (in V), die Drahtfördergeschwindigkeit (m/min), die Fahrgeschwindigkeit, d.h. die Bahngeschwindigkeit des Schweißwerkzeugs entlang der Schweißbahn (cm/min), sowie die Temperaturentwicklung des Grundmaterials entlang der Schweißnaht während des Schweißvorgangs (in willkürlichen Einheiten) aufgetragen. Weiterhin ist die für die Herstellung der Schweißnaht jeweils erforderliche Materialeinbringungsrate (in willkürlichen Einheiten) im Vergleich zu der tatsächlich erzielten (Ist-) Materialeinbringungsrate (ebenfalls in willkürlichen Einheiten) dargestellt.

Bei den dargestellten Werten handelt es sich um beispielhafte Werte; die entsprechenden Verbindungsgeraden zwischen den Punkten dienen lediglich der besseren Darstellung der einzelnen Parameterverläufe und stellen keine Zwischenwerte der in den Figuren 6 und 7 dargestellten Größen dar.

Im Vergleich zu Fig. 6 ist in Fig. 7 der entsprechende Parameterverlauf entlang der Schweißbahn von Fig. 5 bei einem konventionellen DC/MIG-Schweißverfahren gezeigt, wobei in diesem Falle die EN-Rate (konstant 0%) und die EP-Rate (konstant 100%) nicht eingezeichnet sind.

Gemäß Fig. 6 wird in Zusammenhang mit den Richtungsänderungen der Schweißbahn an den Punkten 4 und 9 die EN-Rate von ursprünglich 0% auf jeweils 40% erhöht und im Anschluss an die Richtungsänderung wieder auf 0% eingestellt. Diese Werte sind nur beispielhaft zu verstehen; insbesondere kann die EN-Rate auch bereits auf geradlinigen Abschnitten größer als 0% gewählt werden. Die für den konkreten Anwendungsfall optimalen Werte werden in der Regel bevorzugt experimentell ermittelt.

Im Rahmen der vorliegenden Erfindung wird die Änderung der EN-Rate in zeitlichem Zusammenhang mit der Richtungsänderung vorgenommen. Dieser zeitliche Zusammenhang kann darin bestehen, dass die Änderung der EN-Rate bereits eine bestimmte kurze Zeitdauer bzw. Strecke vor der Richtungsänderung begonnen und erst eine bestimmte Zeitdauer bzw. Strecke nach der Richtungsänderung wieder aufgehoben wird, um die Energieeinbringung auch in die unmittelbare Umgebung der zu verschweißenden Kante bereits zu vermindern. Eine apparative Voraussetzung für die Implementierung des erfindungsgemäßen Verfahrens liegt darin, dass die Schweißparameter des Schweißroboters, insbesondere die EN-Rate, entlang der Schweißbahn koordiniert mit der jeweiligen Schweißposition gesteuert werden können.

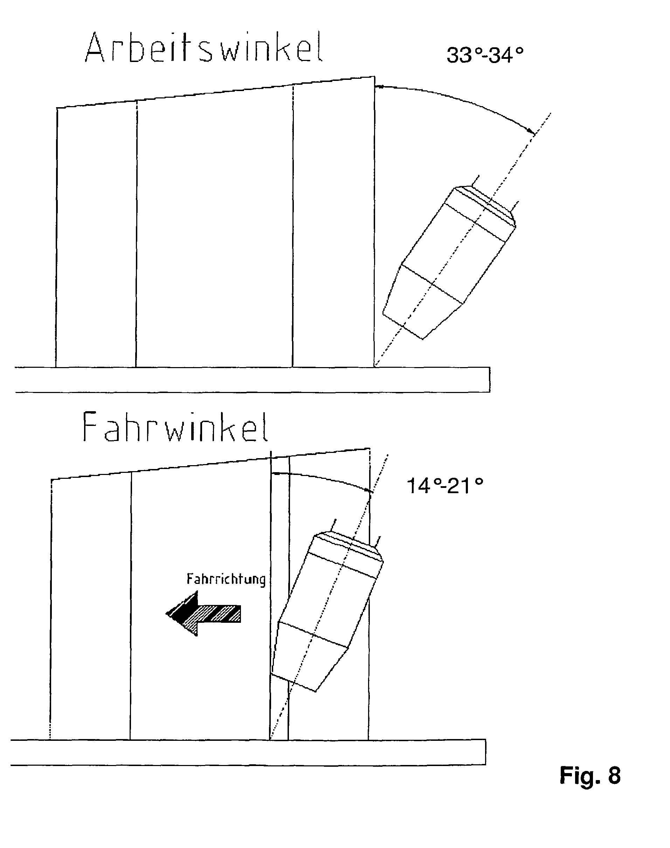

Infolge der Erhöhung der EN-Rate ist es in dem beschriebenen Anwendungsbeispiel nicht erforderlich, den Schweißstrom und/oder die Drahtfördergeschwindigkeit nennenswert zu reduzieren. Im Gegensatz dazu ist bei einem Schweißverfahren gemäß dem Stand der Technik an den Bahnpunkten 4 und 9 (vgl. Fig. 5) eine Reduktion des Schweißstromes und dementsprechend auch der Drahtfördergeschwindigkeit vorgesehen (vgl. Fig. 7), um die Energieeinbringung im Bereich der Richtungsänderungen zu reduzieren. Die entsprechend geringere Materialeinbringung in diesen Bereichen führt jedoch gemäß Fig. 7 dazu, dass an dem Bahnpunkt 9 der Schweißbahn die Ist-Materialeinbringung unter die minimal zulässige Materialeinbringung absinkt, so dass an dieser Stelle die Schweißnaht unvollständig ist. Demgegenüber unterschreitet im Rahmen der erfindungsgemäßen Schweißparametersteuerung gem. Fig. 6 die Ist-Materialeinbringung die entsprechende Minimal-Vorgabe an keinem Punkt der Schweißbahn. Im Gegensatz zu einem Schweißverfahren entsprechend dem Stand der Technik ist es im Rahmen der Erfindung auch nicht erforderlich, im Falle einer Richtungsänderung die Fahrgeschwindigkeit des Schweißbrenners zu erhöhen, um auf diese Weise die Energieeinbringung pro Längeneinheit zu reduzieren, was ebenfalls zu einer in der Regel unerwünschten Verringerung des Nahtvolumens (A-Maß) führt. Weiterhin kann der Anstieg der Temperatur entlang der Schweißbahn bei einem erfindungsgemäßen Verfahren reduziert werden, wie aus einem Vergleich des Temperaturverlaufs in den Figuren 6 und 8 ersichtlich.

Anhand von Fig. 8 wird nachfolgend die Definition der Größen "Arbeitswinkel" und "Fahrwinkel" erläutert, die entlang der Schweißbahn im Wesentlichen konstant aufrecht erhalten werden sollen. Der Schweißbrenner ist zur Erzielung eines optimalen Schweißergebnisses gegenüber der Flächennormalen auf der Grundfläche (d.h. gegenüber einer lotrechten Stellung) geneigt. Die Projektion der Neigungsachse des Brenners auf eine gedachte Fläche, die in Fahrtrichtung des Brenners orientiert ist, wird als Fahrwinkel bezeichnet (vgl. Fig. 8 unten), wohingegen die hierzu orthogonale Winkelkomponente nachfolgend als Arbeitswinkel (vgl. Fig. 8 oben) bezeichnet wird. Für die vorstehend beschriebenen Anwendungen haben sich Arbeitswinkel zwischen 30° bis 40°, vorzugsweise etwa 33° bis 34°, sowie Fahrwinkel zwischen 10° bis 30°, vorzugsweise zwischen etwa 14° bis 21° in stechender Orientierung als besonders geeignet herausgestellt, wobei bei der Verbindung Crashbox-Flanschplatte ein Winkel von 19° bis 21° und bei der Verbindung Crashbox-Stoßfänger ein Winkelbereich von 14° bis 18° als optimal ermittelt wurde. Diese Winkel werden bevorzugt entlang der gesamten Schweißbahn - also auch bei Richtungsänderungen - beibehalten; d.h., dass das Schweißwerkzeug während der Richtungsänderung relativ schnell verschwenkt wird.

Ein weiteres Kriterium für die Güte einer Schweißverbindung stellt die Lunkerfreiheit dar, da Lunker bei ungünstiger Verteilung zu einem Bruch der Schweißnaht führen können.

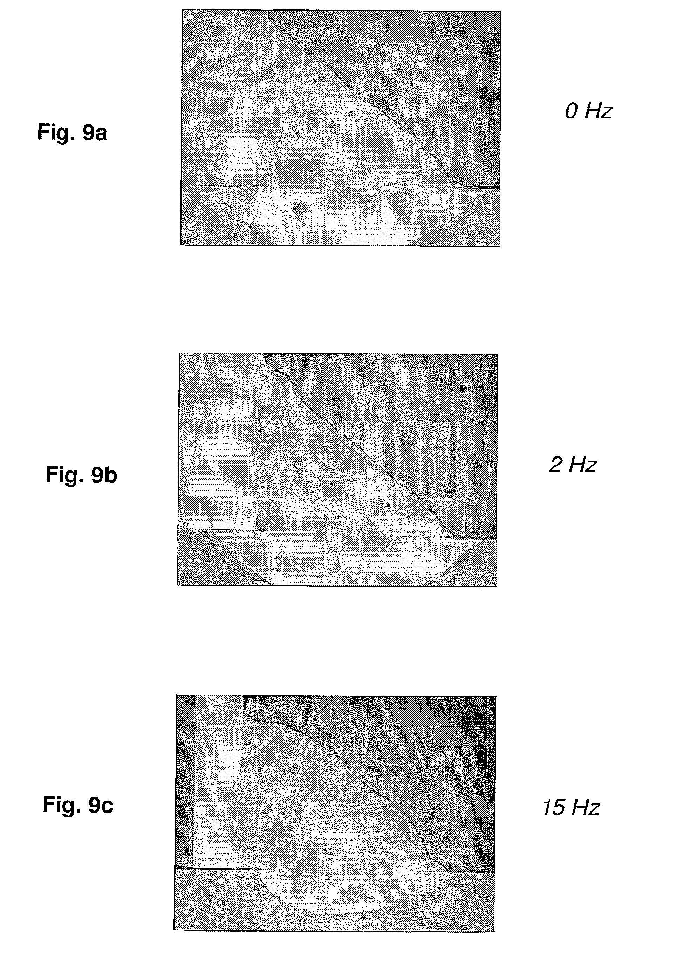

Fig. 9a zeigt eine Schnittdarstellung einer Schweißverbindung, die mittels eines AC/MIG-Verfahrens bei der vorstehend beschriebenen Schweißaufgabe (Grundmaterial A5052 (ALMG)) mit einem Al Mg 4.5 Mn-Draht mit 1.2 mm Durchmesser bei einer Argon 4.6 Zufuhr von 22 l/min und einer Schweißgeschwindigkeit von 40 bis 45 cm/min hergestellt wurde. Gemäß der Schnittdarstellung in Fig. 9a ist die Qualität der Schweißnaht aufgrund auftretender Lunker nicht zufrieden stellend. Es hat sich herausgestellt, dass die Qualität der Schweißnähte dadurch verbessert werden kann, dass der Schweißstrom zusätzlich mit einem niederfrequenten Wechselstrom mit steuerbarer Amplitude und Frequenz moduliert wird. Eine derartige zusätzliche Modulation wird als Wave-Pulsverfahren bezeichnet und üblicherweise mit Modulationsfrequenzen von maximal etwa 10 Hz dazu eingesetzt, eine optisch ansprechende Schuppung der Schweißnaht zu erzielen. Es hat sich jedoch herausgestellt, dass durch eine derartige Wave-Pulsmodulation die Anzahl und Größe der Lunker signifikant verringert werden kann, wobei dieser Aspekt der Erfindung auch unabhängig von dem Verfahren zur Steuerung der Schweißparameter gemäß Patentanspruch 1 eingesetzt werden kann. Dabei hat sich herausgestellt, dass der Einfluss auf die Lunkerbildung mit steigender Wave-Pulsmodulationsfrequenz steigt. Wie aus Fig. 9b ersichtlich, ist die Größe und die Anzahl der Lunker bei einer Modulationsfrequenz 2 Hz nur geringfügig reduziert, wohingegen bei einer Modulationsfrequenz von 15 Hz gemäß der Schnittdarstellung in Fig. 9c eine nahezu lunkerfreie Schweißnaht erzielt wird. Vorzugsweise wird somit eine Frequenz im Bereich zwischen etwa 14 Hz und etwa 30 Hz gewählt.

**Patentansprüche**

1. Verfahren zur Steuerung der Schweißparameter bei einem mittels eines Schweißroboters durchgeführten Metallinertgaslichtbogenschweißvorgang für Aluminium und/oder eine Aluminiumlegierung, wobei der Schweißvorgang als Wechsel strom-Metallinertgas lichtbogenschweißvorgang durchgeführt wird und entlang einer Schweißbahn erfolgt, die wenigstens eine Richtungsänderung aufweist, wobei der Schweißvorgang in einer kontinuierlichen Bewegung ohne Neuansatz entlang der Schweißbahn vorgenommen wird,
**dadurch gekennzeichnet, dass**
bei dem Wechselstrom-Metallinertgaslichtbogenschweißvorgang der Schweißstromanteil elektronegativer Polarität in Höhe und Dauer steuerbar ist, und dass der Schweißstromanteil elektronegativer Polarität in zeitlichem Zusammenhang mit der Richtungsänderung verändert wird.

2. Verfahren nach Anspruch 1,
**dadurch gekennzeichnet, dass**
der Schweißstromanteil mit elektronegativer Polarität unmittelbar vor und während der Änderung der Bahnrichtung geändert und nach Abschluss der Änderung der Bahnrichtung wieder auf seinen ursprünglichen Wert gestellt wird.

3. Verfahren nach Anspruch 2,
**dadurch gekennzeichnet, dass**
der Schweißstromanteil mit elektronegativer Polarität unmittelbar vor und während der Änderung der Bahnrichtung erhöht und nach Abschluss der Änderung der Bahnrichtung wieder auf seinen ursprünglichen Wert reduziert wird.

4. Verfahren nach einem der Ansprüche 1 bis 3,
**dadurch gekennzeichnet, dass**
die Fahrgeschwindigkeit entlang der Schweißbahn bei der Richtungsänderung im Wesentlichen konstant bleibt.

5. Verfahren einem der Ansprüche 1 bis 4,
**dadurch gekennzeichnet, dass**
der Schweißstrom und/oder die Drahtfördergeschwindigkeit entlang der Schweißbahn während der Änderung des Bahnrichtung im Wesentlichen nicht reduziert werden.

6. Verfahren nach einem der Ansprüche 1 bis 5,
**dadurch gekennzeichnet, dass**
der Schweißvorgang zwischen einer Grundplatte (18, 20) und einem mit der Grundplatte zu verbindenden Blechelement (22) durchgeführt wird, das mit einer zu verschweißenden Kante im Wesentlichen senkrecht gegen die Grundplatte (18, 20) anliegt, wobei der Fahrwinkel und der Arbeitswinkel des Schweißbrenners entlang der Schweißbahn konstant gehalten werden.

7. Verfahren nach Anspruch 6,
**dadurch gekennzeichnet, dass**
der Arbeitswinkel 30° bis 40°, vorzugsweise etwa 33° bis 34° beträgt und dass der Fahrwinkel 10° bis 30°, vorzugsweise etwa 14° bis 21° stechend beträgt.

8. Verfahren nach einem der Ansprüche 1 bis 7,

**dadurch gekennzeichnet, dass**
die durch den Schweißvorgang zu verbindenden blechartigen Bauteile (20, 22) eine unterschiedliche Materialdicke aufweisen, wobei das Verhältnis der Materialdicken wenigstens 1:2 beträgt.

**9.** Verfahren nach einem der Ansprüche 1 bis 8,
**dadurch gekennzeichnet, dass**
zwischen den zu verbindenden Bauteilen entlang der Schweißbahn Luftspalte bis etwa 1 mm auftreten.

**10.** Verfahren nach einem der Ansprüche 1 bis 9,
**dadurch gekenhzeichnet, dass**
die Zyklusfrequenz bei dem Wechselstrom-Metallinertgaslichtbogenschweißvorgang zwischen 10 bis 450 Hz, vorzugsweise bei etwa 400 Hz, liegt.

**11.** Verfahren nach einem der Ansprüche 1 bis 10,
**dadurch gekennzeichnet, dass**
die Amplitude des Schweißstroms mit einer zusätzlichen niederfrequenten Wechselspannung mit regelbarer Frequenz und Amplitude moduliert wird.

**12.** Verfahren nach Anspruch 11,
**dadurch gekennzeichnet, dass**
die Frequenz zwischen 14 Hz und 30 Hz beträgt.


**Claims**

**1.** Method for controlling the welding parameters during a metal inert-gas welding process, carried out by means of a welding robot, for aluminium and/or an aluminium alloy, the welding operation being carried out as an alternating-current metal inert-gas welding process and taking place along a welding path which has at least one change in direction, the welding operation being performed in a continuous motion without reattachment along the welding path, **characterized in that,** during the alternating-current metal inert-gas welding process, the welding current component of electronegative polarity is controllable in level and duration, and **in that** the welding current component of electronegative polarity is changed in temporal relationship with the change in direction.

**2.** Method according to Claim 1, **characterized in that** the welding current component with electronegative polarity is changed immediately before and during the change in the direction of the path and is reset again to its original value after completion of the change in the direction of the path.

**3.** Method according to Claim 2, **characterized in that** the welding current component with electronegative polarity is increased immediately before and during the change in the direction of the path and is reduced again to its original value after completion of the change in the direction of the path.

**4.** Method according to one of Claims 1 to 3,
**characterized in that** the travelling speed along the welding path remains substantially constant during the change in direction.

**5.** Method according to one of Claims 1 to 4,
**characterized in that** the welding current and/or the wire feed rate are not substantially reduced along the welding path during the change in direction of the path.

**6.** Method according to one of Claims 1 to 5,
**characterized in that** the welding operation is carried out between a base plate (18, 20) and a sheet element (22), which is to be connected to the base plate and lies with an edge to be welded substantially perpendicularly against the base plate (18, 20), the travelling angle and the operating angle of the welding torch being kept constant along the welding path.

**7.** Method according to Claim 6, **characterized in that** the operating angle is 30° to 40°, preferably approximately 33° to 34°, and **in that** the travelling angle is 10° to 30°, preferably approximately 14° to 21° for a pushing angle.

8. Method according to one of Claims 1 to 7,
**characterized in that** the sheet-like components (20, 22) to be connected by the welding operation have a differing material thickness, the ratio of the material thicknesses being at least 1:2.

9. Method according to one of Claims 1 to 8,
**characterized in that** air gaps of up to about 1 mm occur between the components to be connected along the welding path.

10. Method according to one of Claims 1 to 9,
**characterized in that** the cycle frequency during the alternating-current metal inert-gas welding process lies between 10 and 450 Hz, preferably at about 400 Hz.

11. Method according to one of Claims 1 to 10,
**characterized in that** the amplitude of the welding current is modulated with an additional low-frequency AC voltage with controllable frequency and amplitude.

12. Method according to Claim 11, **characterized in that** the frequency is between 14 Hz and 30 Hz.

**Revendications**

1. Procédé de commande des paramètres de soudage dans une opération de soudage à l'arc en atmosphère de gaz inerte avec électrode métallique effectuée au moyen d'un robot de soudage pour l'aluminium et/ou un alliage d'aluminium, dans lequel l'opération de soudage est exécutée sous la forme d'une opération de soudage à l'arc en atmosphère de gaz inerte avec électrode métallique en courant alternatif et est effectuée le long d'une trajectoire de soudage qui présente au moins un changement de direction, dans lequel l'opération de soudage est exécutée en un mouvement continu sans reprise le long de la trajectoire de soudage, **caractérisé en ce que,** dans l'opération de soudage à l'arc en atmosphère de gaz inerte avec électrode métallique en courant alternatif, la partie du courant de soudage de polarité électronégative est réglable en valeur et en durée, et **en ce que** l'on fait varier la partie du courant de soudage de polarité électronégative en relation temporelle avec le changement de direction.

2. Procédé selon la revendication 1, **caractérisé en ce que** l'on fait varier la partie du courant de soudage de polarité électronégative immédiatement avant et pendant le changement de direction de la trajectoire et on la règle de nouveau à sa valeur initiale après la fin du changement de direction de la trajectoire.

3. Procédé selon la revendication 2, **caractérisé en ce que** l'on augmente la partie du courant de soudage de polarité électronégative immédiatement avant et pendant le changement de direction de la trajectoire et on la réduit de nouveau à sa valeur initiale après la fin du changement de direction de la trajectoire.

4. Procédé selon l'une quelconque des revendications 1 à 3, **caractérisé en ce que** la vitesse de déplacement le long de la trajectoire de soudage reste essentiellement constante lors du changement de direction.

5. Procédé selon l'une quelconque des revendications 1 à 4, **caractérisé en ce que** l'on ne réduit sensiblement pas le courant de soudage et/ou la vitesse d'alimentation du fil le long de la trajectoire de soudage pendant le changement de direction de la trajectoire.

6. Procédé selon l'une quelconque des revendications 1 à 5, **caractérisé en ce que** l'on exécute l'opération de soudage entre une plaque de base (18, 20) et un élément de tôle (22) à assembler à la plaque de base, qui est appliqué en position essentiellement perpendiculaire contre la plaque de base (18, 20) avec une arête à souder, dans lequel l'angle de déplacement et l'angle de travail de la torche de soudage sont maintenus constants le long de la trajectoire de soudage.

7. Procédé selon la revendication 6, **caractérisé en ce que** l'angle de travail vaut 30° à 40°, de préférence environ 33° à 34° et **en ce que** l'angle de déplacement vaut 10° à 30°, de préférence environ 14° à 21° vers l'arrière.

8. Procédé selon l'une quelconque des revendications 1 à 7, **caractérisé en ce que** les pièces en forme de tôle (20, 22) à assembler par l'opération de soudage présentent une épaisseur de matière différente, dans lequel le rapport des épaisseurs de matière vaut au moins 1:2.

9. Procédé selon l'une quelconque des revendications 1 à 8, **caractérisé en ce qu'**il se forme des fentes pouvant atteindre environ 1 mm le long de la trajectoire de soudage entre les pièces à assembler.

10. Procédé selon l'une quelconque des revendications 1 à 9, **caractérisé en ce que** la fréquence de cycle lors de l'opération de soudage à l'arc en atmosphère de gaz inerte avec électrode métallique en courant alternatif se situe entre 10 et 450 Hz, de préférence à environ 400 Hz.

11. Procédé selon l'une quelconque des revendications 1 à 10, **caractérisé en ce que** l'on module l'amplitude du courant de soudage avec une tension alternative supplémentaire à basse fréquence ayant une fréquence et une amplitude réglables.

12. Procédé selon la revendication 11, **caractérisé en ce que** la fréquence vaut entre 14 Hz et 30 Hz.

**1 Zyklus**

EP, Iep

EP

0

EN

EN, Ien

6

4

2

**Fig. 1**

EN Rate:40%

EN Rate:20%

Draht : A5356, 1.2 mm

EN Rate: 10%

EN Rate:0%(DC)

**200**

Drahtförderrate (m/min)

Schweißstrom (A)

**Fig. 2**

| Draht: A5356 ( ALMG5 ), 1.2 mm, Grundmaterial A5052 (ALMG), 1.5 mm + 1.0 mm, 60 A, 90 cm/min | | | |
|---|---|---|---|
| **Spalt** | **0.5 mm** | **1.0 mm** | **1.5 mm** |
| **DC Puls** | | | Unmöglich |
| **AC Puls (EN:20%)** | | | |

**Fig. 3**

| **EN Rate** | **Schnitt** |
|---|---|
| **0% (DC)** | |
| **5%** | |
| **10%** | |
| **20%** | |
| **40%** | |

**Fig. 4**

Fig. 5

Fig. 6

**Fig. 7**

**(STAND DER TECHNIK)**

Arbeitswinkel                     33°-34°

Fahrwinkel                        14°-21°

Fahrrichtung

Fig. 8

**Fig. 9a**

*0 Hz*

**Fig. 9b**

*2 Hz*

**Fig. 9c**

*15 Hz*

**Fig. 10**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- JP 2000246443 A
- DE 69808388 T2
- JP 2002316265 A
- EP 0890407 A1